# EUROPEAN PATENT SPECIFICATION

(11) **EP 1 228 703 B1**
(45) Date of publication and mention of the grant of the patent: **03.05.2006**
(21) Application number: 02447020.5
(22) Date of filing: 06.02.2002
(51) Int. Cl.: A23L 1/212, A23P 1/08, A23B 7/16, A23B 7/04, A23B 7/154

(54) **Frozen fruits**
Gefrorene Früchte
Fruits congelés

(30) Priority: 06.02.2001 EP 01870019
(43) Date of publication of application: 07.08.2002
(73) Proprietor: dirafrost F.F.I. n.v., 3540 Herk-de-Stad (BE)
(72) Inventor: Stulens, Els, 3010 Leuven (BE)
(74) Representative: Vandersteen, Pieter

(56) References cited:
- EP-A1- 0 512 274
- EP-A1- 0 865 740
- WO-A2-96/41542
- DE-A1- 1 928 731
- FR-A1- 2 726 739
- GB-A- 2 100 575
- US-A- 2 137 205
- US-A- 2 511 609
- US-A- 2 909 435
- US-A- 4 713 252
- PATENT ABSTRACTS OF JAPAN vol. 006, no. 174 (C-123), 8 September 1982 (1982-09-08) -& JP 57 091150 A (Q P CORP), 7 June 1982 (1982-06-07)
- PATENT ABSTRACTS OF JAPAN vol. 004, no. 151 (C-028), 23 October 1980 (1980-10-23) & JP 55 096054 A (OOTA TOSHIYUKI;OTHERS: 01), 21 July 1980 (1980-07-21)

## Description

### Field of the invention

The present invention is related to frozen fruits, especially strawberries, which can be put on pies without leaking their juice, to the preparation process of said frozen fruits and to their use in various food preparations.

### Background of the invention and state of the art

Usually, for various food applications, such as strawberry pie, only fresh strawberries are used, because when frozen strawberries are thawed, they tend to loose their juice, due to a broken cell structure by freezing. This characteristic is inherent to the structure of the fruit itself. When they lose their juice the pie becomes wet and the fruits slip off the pie.

However, fresh strawberries are only available during harvest periods. They have to be washed, destalked and cut in half before they can be used on a fruit preparation such as a pie.

On the other hand, frozen fruits are available during the whole year and are easier to handle. They can be used directly, especially on pastry, such as a pie, covered thereafter with glazing gel. Once thawed they are ready for consumption.

However, when the fruit is thawing, the juice is captured by said glazing gel which results in an organoleptically unpleasant gel. Further, leaking juice can soak the pastry underneath it. Therefore, frozen fruits are in practice not used for this purpose due to the leaking of juice and the consequences thereof for a food composition.

Several documents describe special techniques for freezing foodstuff and more particularly fruit such as strawberries.

JP 57091150-A describes a method for freezing strawberries which comprises smearing fresh strawberries with high amounts of powdery saccharides such as sugar together with a thickener such as xanthan gum. The saccharides are applied in high amounts (from 5 to 50 weight%, preferably between 20 and 40 weight%), leading to a sticky, sweet and unattractive mixture after thawing. EP-A-512274 also describes a method for conserving strawberries in which high concentrations (2 to 50, preferably 25 to 40 weight%) of sugar.

US 4,713,252 describes a method for conserving fruit comprising the step of mixing fresh or frozen fruit with sugar syrup in a tumbler, with as result the lowering the fruit's water activity while augmenting the sugar content. 16 to 50 weight % sugar is used. Result of the method is dried sweetened fruit, which needs to be rehydrated if one wishes to use it in stead of fresh fruit in a fruit preparation.

Other documents such as JP 5506054-A and GB 2100575 describe methods for improving preservation by coating with a preserving agent such as ascorbic acid.
Document US 2,511,609 discloses in column 5 frozen fruit, more in particular frozen strawberries, which are dusted with a dry powder containing saccharin and pectin. Subsequently, they are frozen to 0°F. The pectin is added to neutralise the bitter taste of the saccharin. The frozen fruits of this document are aimed at providing tasty but low-calorie fruit to e.g. diabetics.
Document US 2,909,465 describes applying a layer of polysaccharides to raisins prior to covering them with a wax coating, in order to prevent changes in the moisture content of the raisins. The polysaccharide serves as a base layer and allows a closed, moist impermeable wax layer.

None of these prior art methods can provide a fruit product that, after thawing, has all the desired properties such as low water expulsion and a taste and caloric value which isn't influenced by high amounts of added sugar. This makes it impossible to provide a frozen fruit product which can serve as a base product for food compositions and which is close to the natural fresh fruit's flavour, organoleptical qualities and technological parameters.

### Aims of the invention

The present invention aims to provide frozen fruits or frozen fruit pieces, which can be added to a food composition, especially pastry such as pies in its frozen state, without leaking juice when thawing.

Another aim of the present invention is to provide a preparation process of said frozen fruit or frozen fruit pieces and which could be adapted to a general industrial process.

### Summary of the invention

The present invention is related to frozen fruit or frozen fruit pieces, coated with between 0.05 and 5 weight % of a coating powder layer able to avoid juice leaking from said fruit or fruit pieces.

Preferably, between 0.5 and 2 weight % and advantageously about 1 weight % of coating powder is applied.

Advantageously, said coating powder comprises, possibly with other additives, colouring agents, food grade acids flavours, etc. a mixture of stabilising and gelling agents, preferably made of modified starch, pectins, fructans (such as levan or inulin), edible gums (guar gum, xanthan gum, locust bean gum, gelan gum, ...) having advantageously gelling properties.

The frozen fruit and fruit pieces obtained according to the invention are advantageously obtained from individual quick frozen fruit (IQF) and are preferably IQF strawberry halves, healthy and ripe, obtained from non-fermented fruits.

The frozen fruit and fruit pieces obtained according to the invention, are advantageously individually encapsulated with the coating of the stabilising powder layer and could be qualified as an individual quick frozen fruits or fruit pieces which do not leak after thawing.

Another aspect of the present invention is related to the preparation process or method of said coated frozen fruits, comprising the following steps:
- loading a continuously agitated sealed preparation container with said fruits (individually quick frozen fruits),
- a deaeration step of said vessel, lowering the pressure in said vessel preferably to 0.2 bar or less,
- dosing the coating powder on the fruits,
- mixing the fruits and the powder in order to obtain a homogenous dispersion of the coating powder upon the surface of the fruits,
- recovering (discharge, packaging and storage, for instance, in plastic bags, in a cardboard box) of the obtained fruits.

The obtained products can thereafter be easily portioned and put on a food composition, such as a pie, before consumption. All the steps for said preparation are performed under deep freeze temperature conditions (the container or vessel is advantageously pre-cooled at deep-freeze temperature (about -50 C° and preferably with liquid nitrogen) and the obtained products are stored at low temperature. The storage period of the obtained products under deep-freeze temperature condition (about -20 C°) can reach up to two years.

Advantageously, said preparation process could be adapted in order to be integrated in a classical "industrial" process for the preparation of a food composition which may require the addition of other elements in the powder layer such as food grade acids (citric acid, ascorbic acid, ...), food colours and specific flavours.

Usually, the amount of the specific powder layer used in said process varies from about 1% to about 2% in weight of the final obtained product (the total being 100%) in weight.

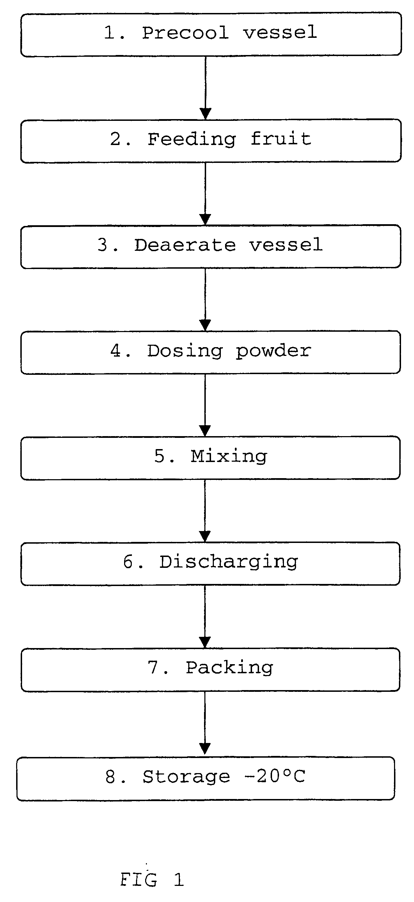

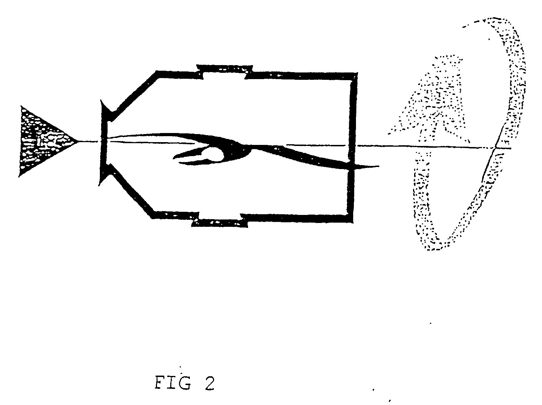

The present invention will be described in more details in the following example, in reference to the enclosed figure 1, showing a schematic flow chart of the various steps used in the method according to the invention and figure 2 representing the movement of the agitating vessel used in the present invention.

### Detailed description of the invention

### Ingredients

In the seasonable harvest of fruit, the ingredient fruits are selected according to their taste, their colour, their size and are cut up in pieces of an appropriate size.

The coating powder according to the invention is composed of a mixture of stabilising agents and possibly flavours.

Said stabilising agents take care of the "water-management" and are allowed to bind the water coming out of the fruit pieces and are a major factor to the success of the obtained frozen fruits or fruit pieces.

The juice coming out of the thawing fruit is absorbed by the stabilisers, which advantageously hydrates and forms a gel. The fruit will keep its shape in the gel layer. Said gel has advantageously a smooth texture in order to give a nice mouthfeel. The stabilising agents need to avoid syneresis after thawing. The stabilising agents have to be freeze-thaw stable and acid stable in order to allow the formation of a gel. Further, also a nice surface gloss is desirable.

Preferably, said mixture of stabilisers are made of modified starch and edible gums. Other ingredients such as food grade acids (citric acid, ascorbic acids), food colours and flavours can be also added to said coating powder. A preferred composition is presented in the following table 1.

| **Frozen fruit:** | |
|---|---|
| Strawberry halves | 100,0 kg |

| **Powder mixture:** | |
|---|---|
| Modified starch | 0,8 kg |
| Guar gum | 0,27 kg |
| Xanthan gum | 0,05 kg |
| Flavour | 0,05 kg |

The preparation process is preferably executed according to the flow chart presented in figure 1:
- the vessel is pre-cooled to -50°C with liquid nitrogen,
- the frozen fruits are fed into the vessel,
- a deaeration step of said vessel, lowering the pressure in said vessel preferably to 0.2 bar or less,
- maximally 5 weight % of powder is dispersed uniformly on the surface of the fruits,
- the fruits and the powder are mixed in the agitating vessel,
- the coated fruits are discharged, packed, stored at -20°C.

The production of the coated fruits can take place in a sealed, agitating vessel, such as the one presented in figure 2.

In said process, the coating powder will be dispersed on the fruits surface and form a thin powder layer which will freeze around the fruit pieces, thus forming a coating layer on the fruit pieces.

The low temperature will result in an improved coating of the fruits and will guarantee also the microbiological stability of the obtained preparation.

The fruits can thereafter be put on a pie (possibly filled with a cream) in its frozen state, a glazing gel can be put on top of it, and when the fruits are thawed, the pie is ready for consumption.

The fruits obtained with the process according to the invention meet the aims of the invention, and are less sweetened by the added powder as any of the prior art product. Therefore, the obtained product according to the invention is more versatile, lower on calories and less sugar needs to be applied to obtain a long conservation frozen fruit.

In general, the following ranges apply for obtaining an acceptable product according to a preferred embodiment of the invention:

| **Frozen fruit:** | |
|---|---|
| Strawberry halves | 100,0 kg |

| **Powder mixture:** | |
|---|---|
| Modified starch | 0,5 - 1,5 kg |
| Guar gum | 0,05 - 0,5 kg |
| Xanthan gum | 0,05 - 0,5 kg |
| Flavour | 0,05 - 0,5 kg |
| Ascorbic acid | 0,05 - 0,5 kg |

## Claims

1. Preparation process for coated frozen fruits or frozen fruit pieces with between 0.05 weight % and 5 weight % of coating powder able to avoid juice leaking from said fruits or fruit pieces applied in a layer, comprising the following steps:
- loading a continuously agitating sealed preparation container with individually quick frozen fruits,
- deaerating said continuously agitating sealed preparation container,
- dosing the coating powder on the fruits,
- mixing the fruits on the powder in order to obtain an homogenous dispersion of the coating powder upon the surface of the fruits,
- recovering the obtained fruits.

2. The process according to the claim 1, **characterised in that** it further comprises the steps of discharging, packaging and storage, preferably in sterile plastic bags, of the obtained fruits.

3. The process according to the claim 1 or 2, **characterised in that** all the steps of said method are performed under deep-freeze temperature conditions.

4. The process according to any of the claims 1 to 3, **characterised in that** said deaeration step comprises lowering the pressure in said vessel to 0.2 bar or less.

5. Frozen fruits or frozen fruit pieces coated with between 0.05 weight % and 5 weight % of coating powder frozen on the surface of the fruit or fruit piece able to avoid juice leaking from said fruits or fruit pieces applied in a layer obtainable with the process according to any of the claims 1 to 4.

6. Frozen fruits or frozen fruit pieces according to the claim 5, wherein said coating powder comprises a mixture of stabilising agents.

7. Frozen fruits or frozen fruit pieces according to the claim 6, wherein said coating powder is a mixture of stabilising and gelling agents selected from the group consisting of modified starch, pectines, fructans and edible gums having gelling properties.

8. Frozen fruits or frozen fruit pieces according to any of the claims 5 to 7, **characterised in that** the fruits are strawberries.

9. Frozen fruits or frozen fruit pieces according to any of the claims 5 to 8, **characterised in that** the coating powder further comprises one or more additive(s) selected from the group consisting of colouring agents, food grade acids or flavours.

10. Use of the frozen fruits or the frozen fruit pieces according to any of the preceding claims 5 to 9, or obtained according to the method of the claim 1 to 4 for the preparation of a food composition.

11. Use according to the claim 10 in pastry, preferably for the preparation of pies.

## Patentansprüche

1. Verfahren zur Herstellung von beschichteten gefrorenen Früchten oder gefrorenen Fruchtstücken mit zwischen 0,05 Gewichts -% und 5 Gewichts-% Beschichtungspulver, das imstande ist, Austreten von Saft von den Früchten oder Fruchtstücken zu vermeiden, und aufgetragen in einer Lage, welches die folgenden Schritte umfasst:
- Laden eines versiegelten Herstellungsbehälters, welcher ständig geschüttelt wird, mit einzelnen schnell gefrorenen Früchten,
- Entlüften des versiegelten Herstellungsbehälters, welcher ständig geschüttelt wird,
- Zumessen des Beschichtungspulvers auf die Früchte,
- Mischen der Früchte auf dem Pulver, um eine einheitliche Feinverteilung des Beschichtungspulvers auf der Oberfläche der Früchte zu erhalten,
- Wiedergewinnen der erhaltenen Früchte.

2. Verfahren nach Anspruch 1, **dadurch gekennzeichnet, dass** es des Weiteren die Schritte des Ausladens, Verpackens und Aufbewahrens, vorzugsweise in sterilen Kunststofftaschen, der erhaltenen Früchte umfasst.

3. Verfahren nach Anspruch 1 oder 2, **dadurch gekennzeichnet, dass** alle Schritte des Verfahrens unter Tiefkühltemperaturbedingungen durchgeführt werden.

4. Verfahren nach irgendeinem der Ansprüche 1 bis 3, **dadurch gekennzeichnet, dass** der Entlüftungsschritt Senken des Drucks in dem Gefäß auf 0,2 Bar oder weniger umfasst.

5. Gefrorene Früchte oder gefrorene Fruchtstücke, die mit zwischen 0,05 Gewichts-% und 5 Gewichts-% auf der Oberfläche der Frucht oder des Fruchtstücks gefrorener Beschichtungspulver beschichtet sind, um das Austreten von Saft von den Früchten oder Fruchtstücken zu vermeiden, das in einer Lage aufgetragen wird, und die durch das Verfahren nach irgendeinem der Ansprüche 1 bis 4 erhalten werden können.

6. Gefrorene Früchte oder gefrorene Fruchtstücke nach Anspruch 5, wobei das Beschichtungspulver eine Mischung aus Stabilisierungsmitteln umfasst.

7. Gefrorene Früchte oder gefrorene Fruchtstücke nach Anspruch 6, wobei das Beschichtungspulver eine Mischung aus Stabilisierungs- und Gelatinierungsmitteln ist, welche aus der Gruppe bestehend aus modifizierter Stärke, Pektinen, Fruktanen und essbaren Gummis mit Gelatinierungseigenschaften ausgewählt sind.

8. Gefrorene Früchte oder gefrorene Fruchtstücke nach irgendeinem der Ansprüche 5 bis 7, **dadurch gekennzeichnet, dass** die Früchte Erdbeeren sind.

9. Gefrorene Früchte oder gefrorene Fruchtstücke nach irgendeinem der Ansprüche 5 bis 8, **dadurch gekennzeichnet, dass** das Beschichtungspulver des Weiteren einen oder mehr Zusatzstoff(e) umfasst, welche aus der Gruppe bestehend aus Färbemitteln, nahrungsmittelgeeigneten Säuren oder Geschmackstoffen ausgewählt sind.

10. Verwendung der gefrorenen Früchte oder gefrorenen Fruchtstücke nach irgendeinem der vorhergehenden Ansprüche 5 bis 9 oder erhalten nach dem Verfahren von Anspruch 1 bis 4 zur Herstellung einer Lebensmittelzusammensetzung.

11. Verwendung nach Anspruch 10 in Teigwaren, insbesondere zur Herstellung von Kuchen.

## Revendications

1. Procédé de préparation de fruits congelés ou de morceaux de fruits congelés enrobés de 0,05 à 5% en poids de poudre d'enrobage capable d'empêcher le jus de couler desdits fruits ou morceaux de fruits, appliquée en une couche, comprenant les étapes suivantes :
- on remplit un récipient de préparation fermé hermétiquement et agité en continu de fruits rapidement congelés individuellement,
- on désaère ledit récipient de préparation fermé hermétiquement et agité en continu,
- on dose la poudre d'enrobage sur les fruits,
- on mélange les fruits sur la poudre pour obtenir une dispersion homogène de la poudre d'enrobage sur la surface des fruits,
- on récupère les fruits obtenus.

2. Procédé selon la revendication 1, **caractérisé en ce qu'**il comprend en outre les étapes de déchargement, d'emballage et de stockage, de préférence dans des sachets plastiques stériles, des fruits obtenus.

3. Procédé selon la revendication 1 ou 2, **caractérisé en ce que** toutes les étapes du dit procédé sont effectuées dans des conditions de températures de surgélation.

4. Procédé selon l'une quelconque des revendications 1 à 3, **caractérisé en ce que** ladite étape de désaération comprend la réduction de la pression dans ledit récipient à 0,2 bar ou moins.

5. Fruits congelés ou morceaux de fruits congelés enrobés de 0,05 à 5% en poids de poudre d'enrobage congelée sur la surface des fruits ou morceaux de fruits capable d'empêcher le jus de couler desdits fruits ou morceaux de fruits, appliquée en une couche que l'on peut obtenir avec le procédé selon l'une quelconque des revendications 1 à 4.

6. Fruits congelés ou morceaux de fruits congelés selon la revendication 5, dans lesquels ladite poudre d'enrobage comprend un mélange de stabilisants.

7. Fruits congelés ou morceaux de fruits congelés selon la revendication 6, dans lesquels ladite poudre d'enrobage est un mélange de stabilisants et de gélifiants choisis dans le groupe constitué de l'amidon modifié, des pectines, des fructanes et des gommes comestibles ayant des propriétés gélifiantes.

8. Fruits congelés ou morceaux de fruits congelés selon l'une quelconque des revendications 5 à 7, **caractérisés en ce que** les fruits sont des fraises.

9. Fruits congelés ou morceaux de fruits congelés selon l'une quelconque des revendications 5 à 8, **caractérisés en ce que** la poudre d'enrobage comprend en outre un ou plusieurs additifs choisis dans le groupe constitué des colorants, des acides ou des arômes alimentaires.

10. Utilisation des fruits congelés ou des morceaux de fruits congelés selon l'une quelconque des revendications précédentes 5 à 9 ou obtenus selon le procédé des revendications 1 à 4 pour la préparation d'une composition alimentaire.

11. Utilisation selon la revendication 10 en pâtisserie, de préférence pour la préparation de tartes.
